# EUROPÄISCHE PATENTSCHRIFT

(11) **EP 3 394 651 B1**
(45) Veröffentlichungstag und Bekanntmachung des Hinweises auf die Patenterteilung: **19.05.2021**
(21) Anmeldenummer: 16819108.8
(22) Anmeldetag: 23.12.2016
(51) Int. Cl.: G02B 6/36

(54) **AUSRICHTUNGSVORRICHTUNG FÜR EIN ENDE EINER LICHTLEITFASER**
ALIGNMENT DEVICE FOR AN END OF AN OPTICAL FIBRE
DISPOSITIF D'ALIGNEMENT POUR UNE EXTRÉMITÉ D'UNE FIBRE OPTIQUE

(30) Priorität: 23.12.2015 LU 92926
(43) Veröffentlichungstag der Anmeldung: 31.10.2018
(73) Patentinhaber: Leica Microsystems CMS GmbH, 35578 Wetzlar (DE)
(72) Erfinder: FEHRER, Dirk-Oliver, 76669 Bad Schönborn (DE)
(74) Vertreter: Grünecker Patent- und Rechtsanwälte PartG mbB
(86) Internationale Anmeldenummer: PCT/EP2016/082519
(87) Internationale Veröffentlichungsnummer: WO 2017/109157

(56) Entgegenhaltungen:
- DE-A1-102004 052 953
- US-A1- 2004 252 948
- US-A1- 2012 224 824

## Beschreibung

Die Erfindung betrifft eine Ausrichtungsvorrichtung für einen auszurichtenden Gegenstand bestehend aus einem Ende einer Lichtleitfaser, wobei der auszurichtende Gegenstand eine Gegenstandslängsrichtung und eine im Wesentlichen senkrecht zur Gegenstandslängsrichtung verlaufenden Austrittsfläche aufweist, mit einer Aufnahme für den auszurichtenden Gegenstand mit einer Aufnahmelängsrichtung und zumindest einer ersten Positioniervorrichtung mit einer ersten Wirkrichtung und einer zweiten Positioniervorrichtung mit einer von der ersten Wirkrichtung verschiedenen zweiten Wirkrichtung, wobei die erste Positioniervorrichtung ein erstes Abgleitelement aufweist, an dem der auszurichtende Gegenstand bei Betätigung der zweiten Positioniervorrichtung entlang der zweiten Wirkrichtung abgleiten kann, und dass die zweite Positioniervorrichtung ein zweites Abgleitelement aufweist, an dem der auszurichtende Gegenstand bei Betätigung der ersten Positioniervorrichtung entlang der ersten Wirkrichtung abgleiten kann.

Für eine Vielzahl von optischen Anwendungen, beispielsweise in der Mikroskopie und dabei insbesondere bei der konfokalen Mikroskopie ist es notwendig, Lichtleitfasern auszurichten, um beispielsweise das austretende Licht zu kontrollieren oder eine exakte Einkopplung in ein weiteres optisches Instrument zu erreichen. Es sind hierzu unter anderem Vorrichtungen bekannt, bei denen zur Justage einer Lichtleitfaser bzw. deren Endstück, das oftmals in Form eines die eigentliche Faser umschließenden Edelstahlzylinders vorliegt, Feingewindeschrauben für eine stufenlose lineare Verstellung in X- und Y-Richtung eingesetzt werden. Unter bestimmten Voraussetzungen ist gleichzeitig eine stufenlose Verstellung des Winkels der Längsachse der Faser in Bezug auf die Längsachse der Vorrichtung möglich. Sowohl der lineare Verstellbereich als auch die Variationsmöglichkeit des Winkels unterliegen dabei in der Praxis engen Grenzen. Der lineare Verstellbereich beträgt beispielsweise ca. +/- 1mm. Eine Justage des Winkels zwischen der Gegenstandslängsrichtung und der Aufnahmelängsrichtung, so dass die beiden Richtungen nicht identisch sind, führt zu einer Verkleinerung des effektiv verfügbaren Verstellbereichs in X- und Y-Richtung.

Vorrichtungen zur Justage von beispielsweise optischen Fasern sind aus der DE 10 2004 052 953 A1, der US 2012 224 824 A1 oder der US 2004 252 948 A bekannt. Diese weisen Stellorgane zur Positionierung bzw. Winkeländerung der optischen Faser auf. Die Stellorgane sind mechanisch, oder durch piezoelektrische Elemente betätigbar, wobei die Aktuatoren eine Anliegefläche oder einen Anliegepunkt eines kuppelförmigen Endes der Stellorgane an der Faser oder einer die Faser umgebenden Hülse aufweisen.

Die bekannten Vorrichtungen weisen oftmals eine Hülse auf, in die das Endstück der Lichtleitfaser eingesetzt wird. So ist es aus der US 6,276,843 B1 bekannt, auf das Endstück der Lichtleitfaser eine Hülse aufzusetzen, die eine konzentrische Bohrung aufweist, so dass die Lichtleitfaser innerhalb der Hülse drehbar ist, was für eine Phasenjustage notwendig ist. Auf der Außenseite weist die Hülse hingegen ebene Flächen auf, an denen die Feingewindeschrauben, die zur Justage der Lage in X-Richtung, in Y-Richtung sowie des Winkels eingesetzt werden, angreifen.

Aus der US 7,014,369 B2 ist eine ähnliche Vorrichtung bekannt, bei der ein zusätzliches Polarisationselement im Strahlengang angeordnet ist, um eine oder mehrere Polarisationsrichtungen des austretenden Lichts einstellen zu können.

Die bekannten Vorrichtungen bieten einen relativ kleinen Verstellbereich und lassen eine Bewegung der Lichtleitfaser in Z-Richtung während der Justage zu. Weiterhin sind die bekannten Vorrichtungen nur wenig flexibel in Bezug auf die Verwendung von Fasern unterschiedlicher Durchmesser.

Es ist daher die Aufgabe der vorliegenden Erfindung, eine Ausrichtungsvorrichtung für ein Ende einer Lichtleitfaser, vorzuschlagen, die einen gegenüber dem Stand der Technik vergrößerten Verstellbereich aufweist und in der Lage ist, Lichtleitfasern unterschiedlicher Durchmesser aufzunehmen.

Zur Lösung der Aufgabe ist erfindungsgemäß vorgesehen, dass das erste Abgleitelement eine senkrecht zur ersten Wirkrichtung verlaufende erste Abgleitkante und das zweite Abgleitelement eine senkrecht zur zweiten Wirkrichtung verlaufende zweite Abgleitkante aufweist. Durch die Abgleitkanten ergibt sich dann prinzipiell immer ein punktförmiger Kontakt zwischen dem auszurichtenden Gegenstand und dem Abgleitelement, was für eine exakte Ausrichtung von Vorteil sein kann.

Durch die erfindungsgemäße Ausgestaltung wird erreicht, dass der auszurichtende Gegenstand, eine Lichtleitfaser, insbesondere eine Glasfaser bzw. deren Endstück, in zwei voneinander verschiedenen Raumrichtungen ausgerichtet werden kann. Dabei können durch Linearverschiebungen die Position des Gegenstands entlang der ersten Wirkrichtung, entlang der zweiten Wirkrichtung und prinzipiell auch entlang der Gegenstandslängsrichtung eingestellt werden, falls dies gewünscht ist. Zusätzlich lässt sich der Winkel zwischen der Gegenstandslängsachse und der Längsachse der Ausrichtungsvorrichtung einstellen. Durch den Verzicht auf die relativ massive Hülse, wie sie bei aus dem Stand der Technik bekannten Vorrichtungen verwendet wird, kann bei gleichen Außenabmessungen ein vergrößerter Verstellbereich zur Verfügung gestellt werden. Darüber hinaus kann die erfindungsgemäße Ausrichtungsvorrichtung eine Vielzahl von Gegenständen unterschiedlicher Durchmesser aufnehmen, ohne dass die Vorrichtung angepasst werden müsste. Funktional wird die aus dem Stand der Technik bekannte Hülse durch die Abgleitelemente ersetzt, die eine ähnliche Funktion erfüllen, jedoch weniger Bauraum beanspruchen und flexibler in ihren Einsatzmöglichkeiten sind. Die Abgleitelemente sind derart ausgestaltet, dass sie auf ihrer einen Seite mit der Positioniervorrichtung, beispielsweise in Form einer Feingewindeschraube, Zusammenwirken, und auf der anderen Seite eine Kraft in Wirkrichtung auf den auszurichtenden Gegenstand ausüben können. Die Möglichkeit der Kraftübertragung wird dabei durch eine Bewegung des auszurichtenden Gegenstands in einer von der Wirkrichtung verschiedenen Richtung nicht beeinflusst. Dies geschieht insbesondere dadurch, dass zu jedem Zeitpunkt ein zumindest punktförmiger Kontakt zwischen Abgleitelement und auszurichtendem Gegenstand aufrecht erhalten wird. Der Ort des Kontakts des Abgleitelements mit dem auszurichtenden Gegenstand ist dabei insbesondere entlang einer geraden Linie möglich. Die Abgleitelemente bewirken dabei, dass sich der auszurichtende Gegenstand beim Verstellen einer der Positioniervorrichtungen jeweils entlang einer geraden Linie bewegt. Es ist allerdings alternativ auch vorstellbar, dass die Abgleitelemente und/oder der auszurichtende Gegenstand so gestaltet sind, dass sich der Gegenstand beim Verstellen einer der Positioniervorrichtungen nicht entlang einer geraden Linie bewegt, sondern dass sich bei der Bewegung in der ersten Wirkrichtung automatisch auch eine abhängige Bewegung in der zweiten Wirkrichtung ergibt.

Der auszurichtende Gegenstand, beispielsweise die Lichtleitfaser, kann eine Austrittsfläche aufweisen, die im Wesentlichen dem Querschnitt des Gegenstands entsprechen kann. Die Austrittsfläche kann eben oder uneben, beispielsweise konvex gewölbt, sein. Weiterhin kann der auszurichtende Gegenstand beispielsweise einen kreisrunden oder ovalen Querschnitt aufweisen. Unter einer Austrittsfläche, die "im Wesentlichen senkrecht zur Gegenstandslängsrichtung" steht, wird insbesondere verstanden, dass zwischen der Austrittsfläche oder einer Ausgleichsebene durch die Austrittsfläche und der Gegenstandslängsrichtung ein Winkel von weniger als 45° besteht. Beispielsweise kann der Winkel kleiner als 20° sein. In einem Spezialfall steht die Austrittsfläche exakt senkrecht auf der Gegenstandslängsrichtung.

Das Ausrichten von Gegenständen mit quadratischem, rechteckigem oder allgemein eckigem Querschnitt ist ebenfalls möglich, besonders vorteilhaft ist die Erfindung aber in Kombination mit einem auszurichtenden Gegenstand mit rundem Querschnitt einsetzbar. Der auszurichtende Gegenstand kann lateral und im Winkel justiert werden.

In einer vorteilhaften Weiterbildung der Erfindung weist die Ausrichtungsvorrichtung eine dritte Positioniervorrichtung mit einer dritten Wirkrichtung und eine vierte Positioniervorrichtung mit einer vierten Wirkrichtung auf. Eine solche Ausgestaltung ermöglicht eine einfache Einstellung des Winkels zwischen Gegenstandslängsrichtung und Aufnahmelängsrichtung. Im Fall einer Lichtleitfaser kann so in einem gewissen Bereich der Austrittswinkel des aus der Lichtleitfaser austretenden Lichts eingestellt werden. Der einzustellende Winkel weist dabei zwei Freiheitsgrade auf und kann innerhalb eines Einstellbereichs vollkommen frei gewählt werden. Aufgrund der vier einzeln bedienbaren Positioniervorrichtungen sind somit insgesamt vier Freiheitsgerade, nämlich zwei transversale Freiheitsgrade und zwei Winkelfreiheitsgrade, verfügbar.

Eine besonders einfache Ausgestaltung ergibt sich, wenn die dritte Wirkrichtung parallel zur ersten Wirkrichtung verläuft und die vierte Wirkrichtung parallel zur zweiten Wirkrichtung verläuft. Gegenüber nicht parallel verlaufenden ersten und dritten sowie zweiten und vierten Wirkrichtungen vereinfacht sich dann insbesondere die Einstellung der transversalen Position des auszurichtenden Gegenstands.

Vorzugsweise stehen die erste Wirkrichtung und die zweite Wirkrichtung senkrecht aufeinander. Es ist dann möglich, eine Justage entlang einer Wirkrichtung vorzunehmen, ohne die Justage entlang der anderen Wirkrichtung zu beeinflussen. Es ist also eine Einstellung der Position in jeder Wirkrichtung unabhängig von der anderen Wirkrichtung möglich. Prinzipiell sind auch vom rechten Winkel verschiedene Winkel zwischen der ersten Wirkrichtung und der zweiten Wirkrichtung möglich. Hierbei sind die beiden Wirkrichtungen bei der Justage aber nicht mehr unabhängig voneinander, sondern beeinflussen sich gegenseitig. Je nach Größe des Winkels kann sich auch der durch transversale Verschiebung maximal erreichbare Raumbereich verkleinern.

In einer Weiterbildung der Erfindung verlaufen die erste Wirkrichtung und die zweite Wirkrichtung jeweils senkrecht zu der Aufnahmelängsrichtung. Es ist so möglich, den auszurichtenden Gegenstand entlang der Aufnahmelängsrichtung, die im Wesentlichen identisch mit der Gegenstandslängsrichtung, beispielsweise also einer Faserlängsrichtung sein kann, zu verschieben, ohne die Justage entlang der ersten Wirkrichtung und der zweiten Wirkrichtung zu beeinflussen. In einer besonders bevorzugten Ausführungsform stehen die erste Wirkrichtung, die zweite Wirkrichtung und die Aufnahmelängsrichtung jeweils senkrecht aufeinander. Die erste Wirkrichtung, die zweite Wirkrichtung und die Aufnahmelängsrichtung können dabei der X-Achse, der Y-Achse und der Z-Achse eines kartesischen Koordinatensystems entsprechen.

In einer nicht beanspruchten Variante, die nicht Teil der Erfindung ist, weist das erste Abgleitelement eine senkrecht zur ersten Wirkrichtung verlaufende erste Abgleitfläche und das zweite Abgleitelement eine senkrecht zur zweiten Wirkrichtung verlaufende zweite Abgleitfläche auf. Die Abgleitflächen können dabei ebene Flächen oder gerundete Flächen sein. Beispielsweise können die Abgleitflächen konvex gewölbte Flächen sein. Bevorzugt ist der Querschnitt der Abgleitflächen entlang der jeweiligen Wirkrichtung zumindest über den Bereich, in dem ein Kontakt der Abgleitfläche mit dem auszurichtenden Gegenstand möglich und/oder gewünscht ist, konstant. In anderen Worten ergibt ein beliebiger Querschnitt, der an einer beliebigen Position entlang der jeweiligen Wirkachse senkrecht zu dieser Wirkachse erstellt wird, ein identisches Profil. Eine solche Ausgestaltung hat den Vorteil, dass ein geradliniges Abgleiten des auszurichtenden Gegenstands an den Abgleitelementen ermöglicht wird.

Die dritte Positioniervorrichtung kann identisch zu der ersten Positioniervorrichtung ausgebildet sein. Ebenso kann die vierte Positioniervorrichtung identisch zu der zweiten Positioniervorrichtung ausgebildet sein. Insbesondere können die dritten und vierten Positioniervorrichtungen den Abgleitkanten der ersten und zweiten Positioniervorrichtungen entsprechende Abgleitkanten aufweisen.

Vorzugsweise sind die erste Positioniervorrichtung und die dritte Positioniervorrichtung sowie die zweite Positioniervorrichtung und die vierte Positioniervorrichtung jeweils unabhängig voneinander betätigbar. Mit anderen Worten sind dann alle Positioniervorrichtungen unabhängig voneinander betätigbar. Hierdurch wird die Einstellung des Winkels zwischen der Gegenstandslängsachse und der Längsachse der Ausrichtungsvorrichtung, also der Aufnahmelängsachse, besonders einfach und ohne zusätzliche technische Maßnahmen möglich.

Die Positioniervorrichtungen können beispielsweise Feingewindeschrauben aufweisen oder von Feingewindeschrauben gebildet werden. Es ist möglich, jeweils eine so genannte Feingewindemutter in die Ausrichtungsvorrichtung einzubringen, welche auf ihrer Innenseite ein Feingewinde aufweist, welches wiederum die Feingewindeschraube aufnehmen kann. Auf ihrer Außenseite kann die Feingewindemutter ein Gewinde aufweisen, mit Hilfe dessen sie in der Ausrichtungsvorrichtung festgelegt werden kann.

20 In einer bevorzugten Ausführungsform drehen sich die Abgleitelemente bei einer linearen Bewegung in Wirkrichtung nicht um eine parallel zur Wirkrichtung liegende Achse. Falls die Positioniervorrichtungen Feingewindeschrauben oder sonstige Schrauben umfassen, drehen sich die Abgleitelemente also nicht, wenn die Schrauben gedreht werden. Dies kann durch eine gelagerte Verbindung zwischen Schraube und Abgleitelement erreicht werden. Beispielsweise kann die Schraube mit Ihrer Spitze in eine Mulde oder Kerbe im Abgleitelement eingreifen, so dass lediglich eine Kraft in Wirkrichtung übertragen werden kann, die Drehbewegung der Schraube aber nicht übertragen wird.

In einer vorteilhaften Weiterbildung der Erfindung ist vorgesehen, dass sie zur Aufnahme einer Lichtleitfaser, insbesondere einer Glasfaser, mit einem Polarisationsring eingerichtet ist und eine 30 Hülse aufweist, in die die Lichtleitfaser eingesetzt werden kann und die eine Aufnahme für einen Polarisationsring aufweist. Auf diese Weise kann eine einmal eingestellte Polarisationsrichtung des austretenden Lichts auf einfache Art und Weise auch bei einer Justage beispielsweise in X-Richtung und in Y-Richtung beibehalten werden.

In einer Weiterbildung der Erfindung weist die Ausrichtungsvorrichtung einen Anschlag auf, der mit einem korrespondierenden Aufnahmeelement an der Hülse derart wechselwirkt, dass eine Maximalposition des auszurichtenden Gegenstands in Aufnahmelängsrichtung definiert wird. Es kann so ein unbeabsichtigtes Entnehmen des Gegenstands bei der Justage sowie beispielsweise ein zu weites Austreten eines Endbereichs des Gegenstands aus der Vorrichtung vermieden werden. Auf diese Weise kann beispielsweise ein physischer Kontakt zwischen dem Ende einer in der Ausrichtungsvorrichtung eingespannten Lichtleitfaser und einem weiteren optischen Element verhindert werden, so dass eine Beschädigung oder Zerstörung der Lichtleitfaser und/oder des weiteren optischen Elements vermieden wird. Vorzugsweise kann auf diese Weise neben der Maximalposition auch eine Minimalposition definiert werden, um den möglichen Einstellbereich festzulegen. Wenn die Maximalposition und die Minimalposition identisch sind, ist der auszurichtende Gegenstand in Aufnahmelängsrichtung fixiert und kann in dieser Richtung nicht bewegt werden.

Eine bevorzugte Ausführungsform der Erfindung sieht vor, dass das erste Abgleitelement um eine erste Schwenkachse, die senkrecht zur ersten Wirkachse und senkrecht zur Aufnahmelängsrichtung steht, schwenkbar ist, und dass das zweite Abgleitelement um eine zweite Schwenkachse, die senkrecht zur zweiten Wirkachse und senkrecht zur Aufnahmelängsrichtung steht, schwenkbar ist. Es wird so eine einfache Befestigungsmöglichkeit für die Abgleitelemente innerhalb der gesamten Vorrichtung geschaffen. Durch die senkrechte Positionierung der Schwenkachsen zur jeweils anderen Wirkachse wird sichergestellt, dass die Längsachsen der Abgleitkanten in ihrer Orientierung zum auszurichtenden Gegenstand konstant bleiben.

Die Ausrichtungsvorrichtung kann eine Spannvorrichtung aufweisen, die zum Ausüben einer Kraft auf den auszurichtenden Gegenstand mit zumindest einem in Richtung der Positioniervorrichtungen gerichteten Anteil eingerichtet ist. Diese Kraft kann beispielsweise senkrecht zur Aufnahmelängsrichtung und entlang der Winkelhalbierenden zwischen den beiden Wirkrichtungen wirken. Der auszurichtende Gegenstand wird so sicher innerhalb der Vorrichtung gehalten und erfährt eine Gegenkraft. Er kann somit nicht in Aufnahmelängsrichtung verrutschen, wenn er in einer der Wirkrichtungen justiert wird. Weiterhin wir es auf diese Art und Weise besonders einfach möglich, Gegenstände unterschiedlicher Durchmesser einzusetzen, zu halten und auszurichten.

Vorteilhafterweise kann die Spannvorrichtung manuell zumindest temporär entspannt werden. Dies hat den Vorteil, dass der Vorgang des Einsetzens und Entnehmens des auszurichtenden Gegenstands in die bzw. aus der Vorrichtung vereinfacht wird. Insbesondere kann die Spannvorrichtung eine oder mehrere Federn aufweisen, die temporär beispielsweise so weit komprimiert werden können, dass der Gegenstand innerhalb der Aufnahme so viel Spiel hat, dass er sich ohne Widerstand entlang der Aufnahmelängsrichtung einsetzen oder entnehmen lässt. Die Spannvorrichtung kann in Form eines Hebels ausgestaltet sein, welcher sich um eine Hebelschwenkachse verschwenken lässt. Dabei können die Federn komprimiert und gleichzeitig der Hebel von den Positioniervorrichtungen entfernt werden.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
- Figur 1: Eine perspektivische Ansicht eines ersten Ausführungsbeispiels einer erfindungsgemäßen Ausrichtungsvorrichtung,
- Figur 2: eine Draufsicht auf das erste Ausführungsbeispiel,
- Figur 3: einen Schnitt durch das erste Ausführungsbeispiel, und
- Figur 4: eine perspektivische Ansicht eines zweiten Ausführungsbeispiels der Erfindung.

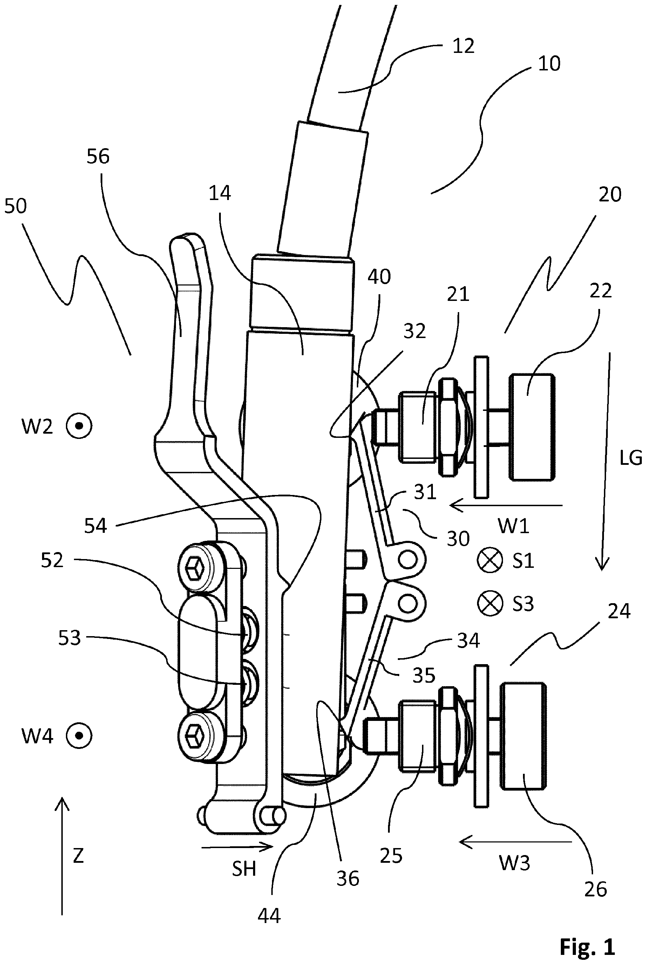

Figur 1 zeigt eine erste Ausführungsform der erfindungsgemäßen Ausrichtungsvorrichtung 10. Zu erkennen ist der auszurichtende Gegenstand in Form einer Lichtleitfaser 12, deren Ende in einem Edelstahlzylinder 14 untergebracht ist. Die Gegenstandslängsrichtung LG gibt in der Figur die Ausrichtung des Edelstahlzylinders 14 wieder, der leicht zur Senkrechten Z (Z-Richtung) verkippt ist. Im rechten Bereich der Figur sind die zwei Feingewindeschrauben 20, 24 zu sehen. Die Feingewindeschrauben 20, 24 können entlang der ersten Wirkrichtung W1, die in diesem Fall parallel zur dritten Wirkrichtung W3 liegt, durch drehen der Feingewindeschrauben 20, 24 verlagert werden. Die Feingewindeschrauben 20, 24 sind jeweils in Feingewindemuttern 21, 25 eingesetzt, die im der Übersichtlichkeit halber nicht dargestellten Grundkörper der Ausrichtungsvorrichtung 10 angeordnet sind. Die Feingewindeschrauben 20, 24 weisen jeweils Handgriffe 22, 26 auf, die einem Benutzer die manuelle Justage der Feingewindeschrauben 20, 24 ermöglichen. Eine Justage mit Hilfe eines Motors oder mehrerer Motoren, beispielsweise Schrittmotoren, ist selbstverständlich ebenfalls möglich.

Durch die angesprochene Verlagerung der Feingewindeschrauben 20, 24 entlang der jeweiligen Wirkrichtungen W1, W3 wird jeweils eine Schwenkbewegung der beiden Abgleitelemente 30, 34 vermittelt. Die Abgleitelemente 30, 34 bestehen aus im Wesentlichen plattenförmigen Grundkörpern 31, 35, die auf einer Seite um die Schwenkrichtungen S1, S3 verschwenkbar gelagert sind, und die auf der anderen Seite jeweils eine Abgleitkante 32, 36 aufweisen. Die Schwenkrichtungen S1, S3 liegen im gezeigten Ausführungsbeispiel parallel und jeweils senkrecht zur Gegenstandslängsrichtung LG sowie zu den Wirkrichtungen W1 und W3. Durch die Schwenkbewegung der Abgleitelemente 30, 34 werden die Abgleitkanten 32, 36 jeweils im Wesentlichen in Richtung der Wirkrichtungen W1 und W3 verlagert, so dass auch das auszurichtende Objekt, in diesem Fall also die Lichtleitfaser 12, entlang der jeweiligen Wirkrichtung W1, W3 verlagert wird. Je größer der Abstand zwischen den Abgleitkanten 32, 36 und den Schwenkachsen ist, desto genauer entspricht die Richtung der Verlagerung der Abgleitkanten 32, 36 den Wirkrichtungen W1 und W3. Prinzipiell ist es auch möglich, dass die Richtungen exakt übereinstimmen. Hierfür ist aber ein anderes Konstruktionsprinzip nötig, das auf die Schwenkachsen verzichtet und beispielsweise eine Linearführung der Abgleitelemente 30, 34 entlang der Wirkrichtungen W1, W3 vorsieht.

Im Hintergrund sind Feingewindeschrauben 40, 44 angedeutet. Diese sind genauso aufgebaut und ebenso Teil von Positioniervorrichtungen wie die Feingewindeschrauben 20, 24. Die zugehörigen Wirkachsen W2 und W4 stehen jeweils senkrecht auf der Gegenstandslängsachse LG und auf den Wirkachsen W1 und W3. Die Feingewindeschrauben 40, 44 arbeiten ebenso wie die Feingewindeschrauben 20, 24 mit Abgleitelementen zusammen, die in der Figur aber nur schlecht erkennbar sind, da sie vom Edelstahlzylinder 14 fast vollständig verdeckt werden.

Im vorderen linken Bereich der Figur ist der Hebel 50 dargestellt, der um die Schwenkachse SH schwenkbar gelagert ist. Die beiden Federn 52, 53 üben einen Druck auf den Hebel 50 aus. Die Hebelschwenkachse SH bildet jeweils einen Winkel von 45° mit den Wirkachsen W1 und W3 sowie W2 und W4. Der Hebel 50 weist eine Abgleitkante 54 auf, deren Längsrichtung mit den Längsrichtungen der Abgleitkanten 32, 36 ebenso wie mit den Längsrichtungen der Abgleitkanten der in der Figur 1 nicht dargestellten Abgleitelemente ebenfalls einen Winkel von 45° bildet. Die Federn 52, 53 bauen somit gleichzeitig in Richtung aller vier Feingewindeschrauben 20, 24, 40, 44 einen Gegendruck auf den Edelstahlzylinder 14 auf, so dass durch Drehen der Feingewindeschrauben 20, 24, 40, 44 eine Justage des Faserendstücks 14 sowohl in positive als auch negative Verstellrichtung der Feingewindeschrauben 20, 24, 40, 44 möglich ist. Durch manuelles Drücken des oberen Endes 56 des Hebels 50 können die Federn 52, 53 komprimiert werden und so der Druck von dem Edelstahlzylinder 14 genommen werden. Es wird so ermöglicht, den auszurichtenden Gegenstand, in diesem Fall also den das Faserende haltende Edelstahlzylinder 14, einfach einzusetzen und wieder zu entnehmen. Die Feingewindeschrauben 20, 24, 40, 44 müssen dabei nicht bewegt werden, so dass eine einmal eingestellte Justage erhalten bleibt.

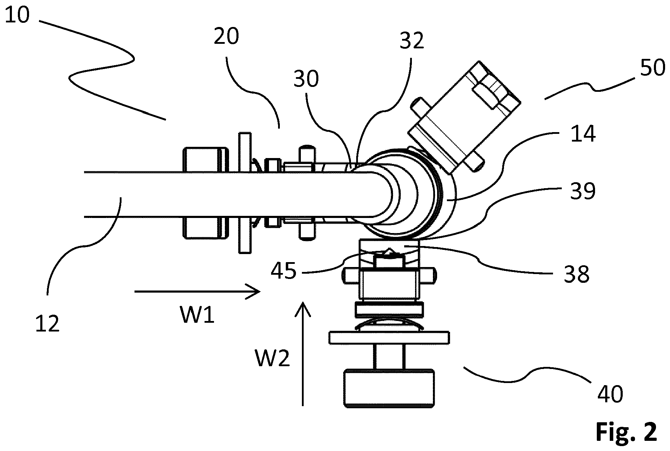

Figur 2 zeigt eine Draufsicht auf das Ausführungsbeispiel gemäß Figur 1. Es sind wiederum die Positioniervorrichtungen mit den Feingewindeschrauben 20, 40 sowie den Abgleitelementen 30, 38 zu erkennen. Ebenfalls ist der Hebel 50 dargestellt, so dass die verschiedenen auf den auszurichtenden Gegenstand 14 wirkenden Kräfte erkennbar werden. Im gezeigten Beispiel stehen die beiden Wirkrichtungen W1 und W2 im rechten Winkel zueinander. Die Abgleitelemente 30, 38 weisen Abgleitkanten 32, 39 sowie Kerben auf, in die die Feingewindeschrauben 20, 40 mit ihren Spitzen bzw. abgerundeten Enden eingreifen. Die Kerbe 45 des Abgleitelements 38 ist sichtbar, die Kerbe des Abgleitelements 30 wird von der Lichtleitfaser 12 verdeckt. Es wird so ein sicherer Kontakt zwischen Abgleitelement 30, 38 und Feingewindeschraube 20, 40 erhalten und vermieden, dass die Feingewindeschraube 20, 40 von dem Abgleitelement 30, 38 abrutscht. Die gezeigte Konstruktion bewirkt weiterhin, dass die Abgleitelemente 30, 38 während einer Drehung der Feingewindeschrauben 20, 40 drehfest bleiben, sich also nicht mit drehen.

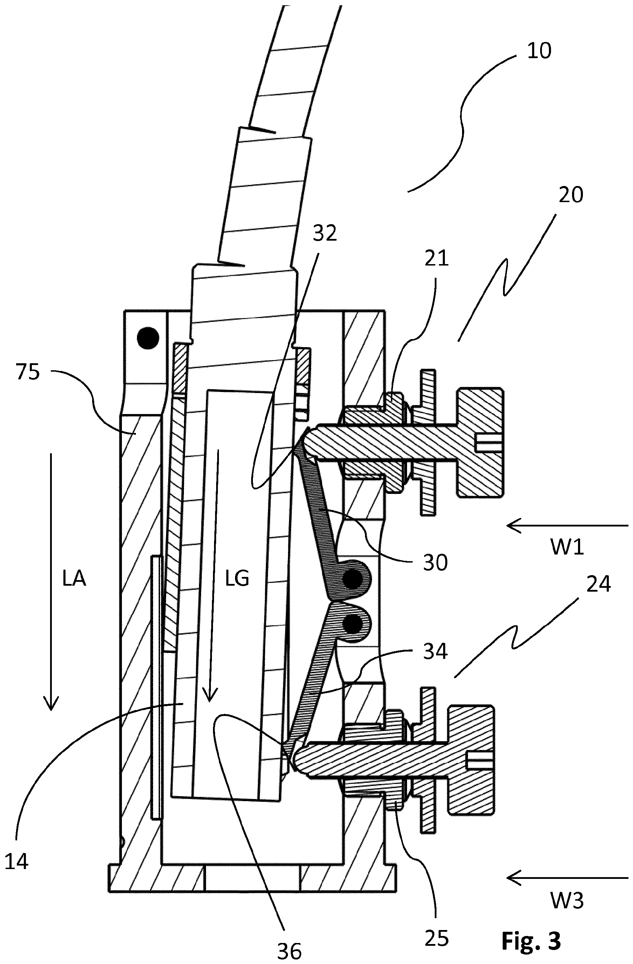

In Figur 3 ist eine Schnittdarstellung analog zu Figur 1 dargestellt. Auf Grund der ausgewählten Perspektive der Darstellung ist der Hebel nicht sichtbar, gezeigt sind somit nur die beiden Feingewindeschrauben 20, 24 sowie die Abgleitelemente 30, 34. Es ist zu erkennen, dass wie in Figur 1 die beiden Feingewindeschrauben 20, 24 so tief in die jeweiligen Aufnahmen 21, 25 hinein geschraubt wurden, dass der Edelstahlzylinder 14 entsprechend entlang der Wirkrichtungen W1 und W3 in der Figur nach links bewegt wurde und sich relativ nah zu der den Justageraum begrenzenden linken Außenwand des (in Figur 1 nicht dargestellten) Grundkörpers 75 der Ausrichtungsvorrichtung 10 befindet. Es ist ebenfalls zu erkennen, dass die Abgleitelemente 30, 34 leicht verschwenkt sind. Die Abgleitkanten 32, 36 haben eine leichte Bewegung senkrecht zu den Wirkrichtungen W1 und W3 entlang der Gegenstandslängsachse ausgeführt. Die Gegenstandslängsrichtung LG bildet mit der Aufnahmelängsrichtung LA einen deutlich wahrnehmbaren, von Null verschiedenen Winkel.

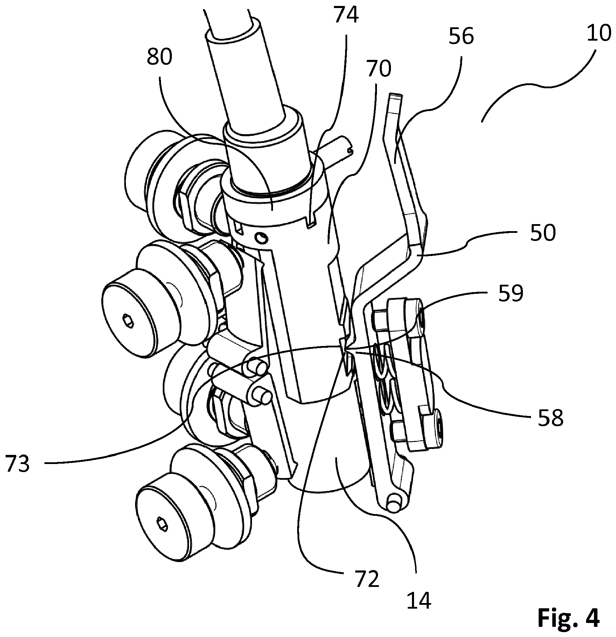

Figur 4 zeigt ein weiteres Ausführungsbeispiel der erfindungsgemäßen Positioniervorrichtung 10. Das gezeigte Ausführungsbeispiel ist um eine Hülse 70 ergänzt, die den auszurichtenden Gegenstand, hier also den Edelstahlzylinder 14, umschließt. Die Hülse 70 ist ausgerichtet, um die möglichen Bewegungen des Faserendstücks 14 einzugrenzen. Zum einen weist die Hülse 70 eine Ausnehmung 72 auf, in die ein korrespondierender Vorsprung 58 des Hebels eingreift. Die Kombination aus Vorsprung 58 und Ausnehmung 72 wirkt als Anschlag in Aufnahmelängsrichtung LA. Sobald der Vorsprung 58 in die Ausnehmung 72 eingreift, ist das Faserendstück 14 in Aufnahmelängsrichtung LA bzw. Gegenstandslängsrichtung fixiert oder zumindest stark in seiner Bewegungsmöglichkeit eingeschränkt, falls der Anschlag ein gewisses Spiel aufweist.

Darüber hinaus weist die Hülse 70 eine Aufnahme 74 auf, in die ein Polarisationsring 80, wie er zur Ausrichtung von Lichtleitfasern aus dem Stand der Technik bekannt ist, eingreifen kann, so das eine Verdrehung des Faserendstücks 14 und damit der Lichtleitfaser in der Vorrichtung verhindert wird. Es wird so sichergestellt, dass die Polarisationsrichtung bei der Justage nicht durch ein versehentliches Verdrehen des Faserendstücks 14 und damit der Lichtleitfaser verändert wird. Zusätzlich wird eine weitere Verdrehsicherung erhalten, da der Vorsprung 58 des Hebels 50 eine ebene Kante 59 aufweist, die mit der ebenen Fläche 73 der Ausnehmung 72 in Kontakt steht. Der Hebel 50 wirkt somit einer Verdrehung des mit der Hülse 70 verbundenen Faserendstücks 14 entgegen, da für eine solche Drehbewegung auch der Hebel 50 verdreht werden müsste, dieser bis auf ein äußerst geringes Spiel aber durch seine Schwenkachse drehfest gesichert ist.

### Bezugszeichenliste

- 10: Ausrichtungsvorrichtung
- 12: Lichtleitfaser
- 14: Edelstahlzylinder

- 20: Feingewindeschraube
- 21: Feingewindemutter
- 22: Handgriff
- 24: Feingewindeschraube
- 25: Feingewindemutter
- 26: Handgriff

- 30: Abgleitelement
- 31: Grundkörper
- 32: Abgleitkante
- 34: Abgleitelement
- 35: Grundkörper
- 36: Abgleitkante
- 38: Abgleitelement
- 39: Abgleitkante

- 40: Feingewindeschraube
- 44: Feingewindeschraube
- 45: Kerbe
- 46: Kerbe

- 50: Hebel
- 52: Feder
- 53: Feder
- 54: Abgleitkante
- 56: oberes Ende
- 58: Vorsprung
- 59: Kante

- 70: Hülse
- 72: Ausnehmung
- 73: ebene Fläche
- 74: Aufnahme
- 75: Grundkörper
- 80: Polarisationsring

- W1: erste Wirkrichtung
- W2: zweite Wirkrichtung
- W3: dritte Wirkrichtung
- W4: vierte Wirkrichtung
- LG: Gegenstandslängsrichtung
- LA: Aufnahmelängsrichtung
- S1: erste Schwenkachse
- S2: zweite Schwenkachse
- SH: Hebelschwenkachse

## Patentansprüche

1. Ausrichtungsvorrichtung (10) für einen auszurichtenden Gegenstand (12) bestehend aus einem Ende einer Lichtleitfaser (14), wobei der auszurichtende Gegenstand (12) eine Gegenstandslängsrichtung LG und eine im Wesentlichen senkrecht zur Gegenstandslängsrichtung LG verlaufenden Austrittsfläche aufweist, mit einer Aufnahme für den auszurichtenden Gegenstand mit einer Aufnahmelängsrichtung LA und zumindest einer ersten Positioniervorrichtung (20) mit einer ersten Wirkrichtung W1 und einer zweiten Positioniervorrichtung (40) mit einer von der ersten Wirkrichtung verschiedenen zweiten Wirkrichtung W2, wobei die erste Positioniervorrichtung (20) ein erstes Abgleitelement (30) aufweist, an dem der auszurichtende Gegenstand bei Betätigung der zweiten Positioniervorrichtung (40) entlang der zweiten Wirkrichtung W2 abgleiten kann, und dass die zweite Positioniervorrichtung (40) ein zweites Abgleitelement (38) aufweist, an dem der auszurichtende Gegenstand (12) bei Betätigung der ersten Positioniervorrichtung (20) entlang der ersten Wirkrichtung W1 abgleiten kann, **dadurch gekennzeichnet, dass** das erste Abgleitelement (30) eine senkrecht zur ersten Wirkrichtung W1 verlaufende erste Abgleitkante (32) und das zweite Abgleitelement (38) eine senkrecht zur zweiten Wirkrichtung W2 verlaufende zweite Abgleitkante (39) aufweist.

2. Ausrichtungsvorrichtung (10) nach Anspruch 1, **dadurch gekennzeichnet, dass** sie eine dritte Positioniervorrichtung (24) mit einer dritten Wirkrichtung W3 und eine vierte Positioniervorrichtung (44) mit einer vierten Wirkrichtung W4 aufweist.

3. Ausrichtungsvorrichtung (10) nach Anspruch 2, **dadurch gekennzeichnet, dass** die dritte Wirkrichtung W3 parallel zur ersten Wirkrichtung W1 verläuft und dass die vierte Wirkrichtung W4 parallel zur zweiten Wirkrichtung W2 verläuft.

4. Ausrichtungsvorrichtung (10) nach einem der vorstehenden Ansprüche, **dadurch gekennzeichnet, dass** die erste Wirkrichtung W1 und die zweite Wirkrichtung W2 senkrecht aufeinander stehen.

5. Ausrichtungsvorrichtung (10) nach einem der vorstehenden Ansprüche, **dadurch gekennzeichnet, dass** die erste Wirkrichtung W1 und die zweite Wirkrichtung W2 jeweils senkrecht zu der Aufnahmelängsrichtung LA verlaufen.

6. Ausrichtungsvorrichtung (10) nach einem der Ansprüche 2 bis 5, **dadurch gekennzeichnet, dass** die erste Positioniervorrichtung (20) und die dritte Positioniervorrichtung (24) sowie die zweite Positioniervorrichtung (40) und die vierte Positioniervorrichtung (44) jeweils unabhängig voneinander betätigbar sind.

7. Ausrichtungsvorrichtung (10) nach einem der vorstehenden Ansprüche, **dadurch gekennzeichnet, dass** die Positioniervorrichtungen (20, 24, 40, 44) Feingewindeschrauben aufweisen.

8. Ausrichtungsvorrichtung (10) nach einem der vorstehenden Ansprüche, **dadurch gekennzeichnet, dass** die Abgleitelemente (30, 34, 38) sich bei einer linearen Bewegung in Wirkrichtung W1, W2, W3, W4 nicht um eine parallel zur Wirkrichtung W1, W2, W3, W4 liegende Achse drehen.

9. Ausrichtungsvorrichtung (10) nach einem der vorstehenden Ansprüche, **dadurch gekennzeichnet, dass** sie zur Aufnahme der Lichtleitfaser (12), insbesondere einer Glasfaser, mit einem Polarisationsring (80) eingerichtet ist und eine Hülse (70) aufweist, in die die Lichtleitfaser (12) eingesetzt werden kann und die eine Aufnahme für einen Polarisationsring (80) aufweist.

10. Ausrichtungsvorrichtung (10) nach Anspruch 9, **gekennzeichnet durch** einen Anschlag (58), der mit einem korrespondierenden Element (72) an der Hülse (70) derart wechselwirkt, dass eine Maximalposition des auszurichtenden Gegenstands (12) in Aufnahmelängsrichtung LA definiert wird.

11. Ausrichtungsvorrichtung (10) nach einem der vorstehenden Ansprüche, **dadurch gekennzeichnet, dass** das erste Abgleitelement (30) um eine erste Schwenkachse, die senkrecht zur ersten Wirkachse W1 und senkrecht zur Aufnahmelängsrichtung LA steht, schwenkbar ist, und dass das zweite Abgleitelement (38) um eine zweite Schwenkachse, die senkrecht zur zweiten Wirkachse W2 und senkrecht zur Aufnahmelängsrichtung LA steht, schwenkbar ist.

12. Ausrichtungsvorrichtung (10) nach einem der vorstehenden Ansprüche, **gekennzeichnet durch** eine Spannvorrichtung (50), die zum Ausüben einer in Richtung der Positioniervorrichtungen (20, 24, 40, 44) gerichteten Kraft auf den auszurichtenden Gegenstand (12) eingerichtet ist.

13. Ausrichtungsvorrichtung (10) nach Anspruch 12, **dadurch gekennzeichnet, dass** die Spannvorrichtung (50) manuell zumindest temporär entspannt werden kann.

14. Mikroskop, insbesondere konfokales Mikroskop, mit einer Ausrichtungsvorrichtung (10) nach einem der Ansprüche 1 bis 13.

15. Verwendung einer Ausrichtungsvorrichtung nach einem der Ansprüche 1 bis 13 zum Ausrichten eines Gegenstands (12) bestehend aus einem Ende einer Lichtleitfaser, in zumindest zwei voneinander verschiedenen Raumrichtungen.

## Claims

1. An alignment device (10) for an object (12) to be aligned consisting of an end of an optical fibre (4), wherein the object (12) to be aligned has a longitudinal object direction LG and an emitting face which runs substantially perpendicular to the longitudinal object direction LG, having a receptacle for the object to be aligned with a longitudinal receptacle direction LA and at least a first positioning device (20) having a first direction of action W1 and a second positioning device (40) having a second direction of action W2 which differs from the first direction of action, wherein the first positioning device (20) has a first glide element (30) on which the object to be aligned can glide in the second direction of action W2 when the second positioning device (40) is actuated, and in that the second positioning device (40) has a second glide element (38) on which the object (12) to be aligned can glide in the first direction of action W1 when the first positioning device (20) is actuated, **characterized in that** the first glide element (30) has a first glide edge (32) running perpendicular to the first direction of action W1 and the second glide element (38) has a second glide edge (39) running perpendicular to the second direction of action W2.

2. The alignment device (10) as claimed in claim 1, **characterized in that** it has a third positioning device (24) with a third direction of action W3 and a fourth positioning device (44) with a fourth direction of action W4.

3. The alignment device (10) as claimed in claim 2, **characterized in that** the third direction of action W3 runs parallel to the first direction of action W1 and **in that** the fourth direction of action W4 runs parallel to the second direction of action W2.

4. The alignment device (10) as claimed in one of the preceding claims, **characterized in that** the first direction of action W1 and the second direction of action W2 are perpendicular to each other.

5. The alignment device (10) as claimed in one of the preceding claims, **characterized in that** the first direction of action W1 and the second direction of action W2 respectively run perpendicular to the longitudinal receptacle direction LA.

6. The alignment device (10) as claimed in one of claims 2 to 5, **characterized in that** the first positioning device (20) and the third positioning device (24) as well as the second positioning device (40) and the fourth positioning device (44) can respectively be actuated independently of each other.

7. The alignment device (10) as claimed in one of the preceding claims, **characterized in that** the positioning devices (20, 24, 40, 44) have fine thread screws.

8. The alignment device (10) as claimed in one of the preceding claims, **characterized in that** during a linear movement in the direction of action W1, W2, W3, W4, the glide elements (30, 34, 38) do not turn about an axis running parallel to the direction of action W1, W2, W3, W4.

9. The alignment device (10) as claimed in one of the preceding claims, **characterized in that**, in order to receive the optical fibre (12), in particular a glass fibre, it is equipped with a polarisation ring (80) and a sleeve (70) into which the optical fibre (12) can be inserted and which has a receptacle for a polarisation ring (80).

10. The alignment device (10) as claimed in claim 9, **characterized by** an end stop (58) which cooperates with a corresponding element (72) on the sleeve (70) in a manner such that a maximum position for the object (12) to be aligned is defined in the longitudinal receptacle direction LA.

11. The alignment device (10) as claimed in one of the preceding claims, **characterized in that** the first glide element (30) is pivotable about a first pivot axis which runs perpendicular to the first axis of action W1 and perpendicular to the longitudinal receptacle direction LA, and **in that** the second glide element (38) is pivotable about a second pivot axis which runs perpendicular to the second axis of action W2 and perpendicular to the longitudinal receptacle direction LA.

12. The alignment device (10) as claimed in one of the preceding claims, **characterized by** a clamping device (50) which, in order to exert a force acting in the direction of the positioning devices (20, 24, 40, 44), is fitted onto the object (12) to be aligned.

13. The alignment device (10) as claimed in claim 12, **characterized in that** the clamping device (50) can be released manually, at least temporarily.

14. A microscope, in particular a confocal microscope, having an alignment device (10) as claimed in one of claims 1 to 13.

15. Use of an alignment device as claimed in one of claims 1 to 13, for the alignment of an object (12) consisting of an end of an optical fibre in at least two directions in space which are different from each other.

## Revendications

1. Dispositif d'alignement (10) pour un objet (12) à aligner constitué d'une extrémité d'une fibre optique (14), dans lequel l'objet (12) à aligner présente une direction longitudinale d'objet LG et une surface de sortie s'étendant de manière essentiellement perpendiculaire par rapport à la direction longitudinale d'objet LG, avec un réceptacle pour l'objet à aligner, présentant une direction longitudinale de réceptacle LA, et au moins un premier dispositif de positionnement (20) avec une première direction d'action W1 et un deuxième dispositif de positionnement (40) avec une deuxième direction d'action W2 différente de la première direction d'action, dans lequel le premier dispositif de positionnement (20) présente un premier élément coulissant (30) au niveau duquel l'objet à aligner peut coulisser le long de la deuxième direction d'action W2 lorsque le deuxième dispositif de positionnement (40) est actionné, et en ce que le deuxième dispositif de positionnement (40) présente un second élément coulissant (38) au niveau duquel l'objet (12) à aligner peut coulisser le long de la première direction d'action W1 lorsque le premier dispositif de positionnement (20) est actionné, **caractérisé en ce que** le premier élément coulissant (30) présente une première arête de coulissement (32) s'étendant de manière perpendiculaire par rapport à la première direction d'action W1 et le second élément coulissant (38) présente une seconde arête de coulissement (39) s'étendant de manière perpendiculaire par rapport à la deuxième direction d'action W2.

2. Dispositif d'alignement (10) selon la revendication 1, **caractérisé en ce qu'**il présente un troisième dispositif de positionnement (24) avec une troisième direction d'action W3 et un quatrième dispositif de positionnement (44) avec une quatrième direction d'action W4.

3. Dispositif d'alignement (10) selon la revendication 2, **caractérisé en ce que** la troisième direction d'action W3 est parallèle à la première direction d'action W1 et **en ce que** la quatrième direction d'action W4 est parallèle à la deuxième direction d'action W2.

4. Dispositif d'alignement (10) selon l'une quelconque des revendications précédentes, **caractérisé en ce que** la première direction d'action W1 et la deuxième direction d'action W2 sont mutuellement perpendiculaires.

5. Dispositif d'alignement (10) selon l'une quelconque des revendications précédentes, **caractérisé en ce que** la première direction d'action W1 et la deuxième direction d'action W2 sont respectivement perpendiculaires à la direction longitudinale de réceptacle LA.

6. Dispositif d'alignement (10) selon l'une quelconque des revendications 2 à 5, **caractérisé en ce que** le premier dispositif de positionnement (20) et le troisième dispositif de positionnement (24) ainsi que le deuxième dispositif de positionnement (40) et le quatrième dispositif de positionnement (44) peuvent être actionnés respectivement de manière mutuellement indépendante.

7. Dispositif d'alignement (10) selon l'une quelconque des revendications précédentes, **caractérisé en ce que** les dispositifs de positionnement (20, 24, 40, 44) présentent des vis à pas fin.

8. Dispositif d'alignement (10) selon l'une quelconque des revendications précédentes, **caractérisé en ce que** les éléments coulissants (30, 34, 38) ne tournent pas autour d'un axe parallèle à la direction d'action W1, W2, W3, W4 lors d'un déplacement linéaire dans la direction d'action W1, W2, W3, W4.

9. Dispositif d'alignement (10) selon l'une quelconque des revendications précédentes, **caractérisé en ce qu'**il est conçu pour recevoir la fibre optique (12), en particulier une fibre de verre, avec une bague de polarisation (80) et présente un manchon (70) au sein duquel la fibre optique (12) peut être insérée et qui présente un réceptacle pour une bague de polarisation (80).

10. Dispositif d'alignement (10) selon la revendication 9, **caractérisé par** une butée (58) qui interagit avec un élément (72) correspondant présent au niveau du manchon (70) de telle manière qu'une position maximale de l'objet (12) à aligner est définie dans la direction longitudinale de réceptacle LA.

11. Dispositif d'alignement (10) selon l'une quelconque des revendications précédentes, **caractérisé en ce que** le premier élément coulissant (30) peut pivoter autour d'un premier axe de pivotement perpendiculaire au premier axe d'action W1 et perpendiculaire à la direction longitudinale de réceptacle LA, et **en ce que** le second élément coulissant (38) peut pivoter autour d'un second axe de pivotement perpendiculaire au second axe d'action W2 et perpendiculaire à la direction longitudinale de réceptacle LA.

12. Dispositif d'alignement (10) selon l'une quelconque des revendications précédentes, **caractérisé par** un dispositif de serrage (50) conçu pour exercer sur l'objet (12) à aligner une force dirigée en direction des dispositifs de positionnement (20, 24, 40, 44).

13. Dispositif d'alignement (10) selon la revendication 12, **caractérisé en ce que** le dispositif de serrage (50) peut être desserré manuellement de manière au moins temporaire.

14. Microscope, en particulier microscope confocal, avec un dispositif d'alignement (10) selon l'une quelconque des revendications 1 à 13.

15. Utilisation d'un dispositif d'alignement selon l'une quelconque des revendications 1 à 13 pour aligner un objet (12), constitué d'une extrémité d'une fibre optique, dans au moins deux directions spatiales mutuellement différentes.
